Europäisches Patentamt

European Patent Office

Office européen des brevets

(11) Veröffentlichungsnummer: **0 391 177**
**A2**

(12) **EUROPÄISCHE PATENTANMELDUNG**

(21) Anmeldenummer: **90105580.6**

(22) Anmeldetag: **23.03.90**

(51) Int. Cl.⁵: **B60H 1/32, F25D 21/14, F28F 17/00**

(30) Priorität: **05.04.89 DE 3911010**

(43) Veröffentlichungstag der Anmeldung:
**10.10.90 Patentblatt 90/41**

(84) Benannte Vertragsstaaten:
**DE DK ES GB IT**

(71) Anmelder: **AURORA Konrad G. Schulz GmbH & Co**
**Südring 4**
**D-6933 Mudau/Odenwald(DE)**

(72) Erfinder: **Schulz, Joachim**
**Neudorfer Strasse 2**
**D-8972 Amorbach(DE)**

(74) Vertreter: **Baronetzky, Klaus et al**
**Patentanwalte Dipl.-Ing. R. Splanemann, Dr. B. Reitzner, Dipl.-Ing. K. Baronetzky Tal 13**
**D-8000 München 2(DE)**

(54) **Ablaufstutzen.**

(57) Bei einem Ablaufstutzen (10) für die Entwässerung von Kondensatwasserwannen (14) einer Fahrzeug-Klimaanlage ist ein Flansch (16) vorgesehen, der einen Einlaß (18) umgibt. An diesen Einlaß (18) schließt sich ein Auslaßrohr (20) an. Der Flansch (16) weist im wesentlichen radial verlaufende Einströmausnehmungen auf, die sich von seinem Außenrand (36) zum Einlaß (18) erstrecken.

FIG. I

EP 0 391 177 A2

Die Erfindung betrifft einen Ablaufstutzen gemäß dem Oberbegriff von Anspruch 1, sowie eine mit einem derartigen Ablaufstutzen ausgestattete Kondensatwasserwanne gemäß dem Oberbegriff von Anspruch 11.

Es ist bekannt, Fahrzeug-Klimaanlagen unterhalb des Verdampfers mit Schrägflächen auszustatten, auf denen sich das anfallende und abtropfende Kondensatwasser sammelt und über welche das Kondensatwasser abgeführt werden kann. Als Ablaufstutzen wird dann ein entsprechend geformtes Anschlußstück verwendet, das das Kondensatwasser über eine Rohrleitung abführt.

Einerseits ist die Fertigung der Anschlußstücke aber ziemlich teuer. Andererseits muß die Schrägfläche zur Abführung und Sammlung des Kondensatwassers praktisch in zwei Richtungen abfallen, so daß die Befestigung aufwendiger wird, als dies erforderlich ist, und zudem erheblich mehr Raum benötigt wird als bei einer flachen Kondensatwasserwanne.

Es sind auch flache Kondensatwasserwannen bekannt, deren Vorteil darin besteht, daß sie platzsparend bauen und preisgünstig herzustellen sind und unmittelbar unterhalb der Verdampfers angeordnet werden können. Weiterhin bietet es sich bei flachen Kondensatwasserwannen an, die Begrenzungswände für die Luftführung zugleich auch als Seitenwand der Kondensatwasserwanne zu verwenden, so daß hier kein separates Bauteil erforderlich ist und weiter Platz und Kosten gespart werden können.

Die Ablaufstutzen derartiger Kondensatwasserwannen wiesen bislang in den Boden der Kondensatwasserwanne eingearbeitete Einlauftrichter auf. Diese verursachten jedoch erhebliche Zusatzkosten, da entsprechende Werkzeuge und Verformungsarbeiten für den Einlauftrichter anfielen, so daß man von dieser Lösung überwiegend abgekommen ist.

Es ist auch bereits vorgeschlagen worden, Kondensatwasserwannen aus korrosionsbeständigem Kunststoff auszubilden und geeignete Ablaufstutzen möglichst flach zu montieren, wobei im wesentlichen ein im Querschnitt rechteckiges Profil für den Flansch verwendet wurde.

Bei dieser Lösung ergaben sich jedoch mehrere Probleme. Zum einen bildete das in der Kondensatwasserwanne stehende Rest-Tropfwasser einen Bakterienherd, da es über den Ablaufstutzen nicht entfernt werden konnte. Zum anderen zeigte es sich überraschenderweise, daß die Ablaufstutzen, die zunächst verhältnismäßig kleinbauend ausgebildet waren, wiederholt abbrachen.

Demgegenüber ist es Aufgabe der Erfindung, einen Ablaufstutzen gemäß dem Oberbegriff von Anspruch 1, sowie eine entsprechend ausgebildete Kondensatwasserwanne gemäß dem Oberbegriff von Anspruch 11 zu schaffen, die einerseits langzeitstabil ist, andererseits der Vermeidung von Bakterienherden im Kondensatwasser dient und sogar noch vergleichsweise preisgünsitg herzustellen und zu montieren ist und nur geringen Materialbedarf erfordert.

Diese Aufgabe wird erfindungsgemäß durch Anspruch 1 gelöst. Vorteilhafte Weiterbildungen ergeben sich aus den Unteransrpüchen.

Mit den erfindungsgemäßen Einströmausnehmungen ergeben sich zunächst mehrere Vorteile: Es ist möglich, nach wie vor mit flachen Kondensatwasserwannen zu arbeiten, wobei die sich radial erstreckenden Einströmausnehmungen unterhalb der Oberfläche des Flansches liegen können und das anstehende Restwasser abführen können.

Mit den erfindungsgemäßen Maßnahmen läßt sich überraschenderweise besonders günstig der bei in Fahrt befindlichen Kraftfahrzeugen auftretende Schwappeffekt ausnutzen. Die Bewegung der auch völlig ebenen Kondensatwasserwanne führt nämlich zu einem Hin- und Herströmen des Kondensatwasserrests. Durch entsprechend ausgebildete Einströmausnehmungen wird nun der an den Flansch des Ablaufstutzens vorbeiströmende Teil des Kondensatwasserrests praktisch eingefangen und dem Ablaufstutzen zugeleitet, so daß dieser ebenfalls abgeführt werden kann.

Überraschend läßt sich mit der Erfindung ebenfalls das bislang bestehende Festigkeitsproblem lösen. Indem man Einströmausnehmungen vorsieht, wird die Möglichkeit eröffnet, den Flansch den auftretenden Belastungen entsprechend ballig auszugestalten, ohne daß eine hohe Abweiskante das Zuströmen des Kondensatwasserrestes verhindern würde. In dem besonders gefährdeten Bereich an dem Übergang zwischen dem Flansch und dem Einlaß steht damit eine erhöhte Materialstärke zur Verfügung, so daß es auch bei schwingenden Abführschläuchen, wie sie in Kraftfahrzeugen auftreten können, nicht zu Brüchen an dieser Stelle kommen kann.

In diesem Zusammenhang ist es besonders günstig, wenn die Abschlußkante des Flansches nach unten/außen spitz zuläuft, wodurch einerseits eine Dichtlippe gebildet wird und andererseits die anlaufende Strömung des schwappenden Wassers nicht reflektiert, sondern etwas angehoben wird.

Dichtungsmaßnahmen können in der üblichen Weise erfolgen, wobei beispielsweise eine ringförmige Dichtung aus einem geschlossenporigen Schaumstoff von oben oder unten gegen den Boden der Kondensatwasserwanne abdichtend und den Einlaß umgebend vorgesehen sein kann, die dann entweder über eine Federscheibe oder aber über eine entsprechend ausgebildete Mutter, die auf einem Außengewinde auf dem Einlaß geführt ist, gehalten wird.

Selbstverständlich ist es auch möglich, anstelle dessen eine Dichtung in Form eines O-Rings vorzusehen, wobei es aus Gründen der geringeren Bautiefe oberhalb der Kondensatwasserwanne günstig ist, die Dichtlinie nach unten zu verlagern.

Gemäß einer vorteilhaften Weiterbildung bietet es sich an, die sich für den Formschluß eignenden Teile des Flansches für die drehfeste Abstützung zum Zwecke des Festziehens während der Montage zu verwenden. Beispielsweise können die Einströmausnehmungen selbst mit einem entsprechend ausgebildeten Werkzeug, das mit diesen in Eingriff steht, den Flansch und damit den Ablaufstutzen drehfest halten, während die Mutter angezogen wird.

Besonders günstig ist es, am Innenumfang des Einlasses einen Vielkant, wie beispielsweise einen Sechskant, auszubilden, mit dem mit Hilfe eines Imbusschlüssels der Ablaufstutzen während des Festziehens der Mutter in der gewünschten Richtung gehalten werden kann.

Gemäß einer weiteren vorteilhaften Ausgestaltung ist es vorgesehen, zwischen Einlaß und Auslaßrohr einen Winkel vorzusehen, der 90° übersteigt. In diesem Falle läßt sich vermeiden, daß im Übergangsbereich zwischen Einlaß- und Auslaßrohr Restwasser verbleibt, da dann stets eine leichte Neigung des Auslaßrohres gegenüber der Horizontalen besteht.

Wenn eine Dichtung oberhalb des Bodens der Kondensatwasserwanne verwendet werden soll, ist es günstig, als Material hierzu den bereits angesprochenen geschlossenporigen Schaumstoff zu verwenden, da dieser sich sehr stark zusammendrücken läßt, so daß die Abdichtung sichergestellt ist, obwohl die Freirandhöhe gegenüber der oberen Fläche des Bodens der Kondensatwasserwanne nur unwesentlich erhöht ist.

Weitere Einzelheiten, Vorteile und Merkmale ergeben sich aus der nachstehenden Beschreibung mehrerer Ausführungsbeispiele der Erfindung anhand der Zeichnung.

Es zeigen:

Fig. 1 einen Schnitt eines Ausführungsbeispiels eines erfindungsgemäßen Ablaufstutzens;

Fig. 2 eine Vorderansicht des Ablaufstutzens gemäß Fig. 1;

Fig. 3 eine Ansicht von unten auf den Ablaufstutzen gemäß Fig. 1;

Fig. 4 eine Draufsicht von oben auf den Ablaufstutzen gemäß Fig. 1, wobei jedoch das Auslaßrohr nicht dargestellt ist;

Fig. 5 einen Schnitt durch eine weitere Ausführungsform eines erfindungsgemäßen Ablaufstutzens;

Fig. 6 eine Ansicht von vorne auf den Ablaufstutzen gemäß Fig. 5;

Fig 7 eine Ansicht von unten auf den Ablaufstutzen gemäß Fig. 5; und

Fig. 8 eine Draufsicht auf den Ablaufstutzen gemäß Fig. 5, wobei jedoch das Auslaßrohr nicht dargestellt ist.

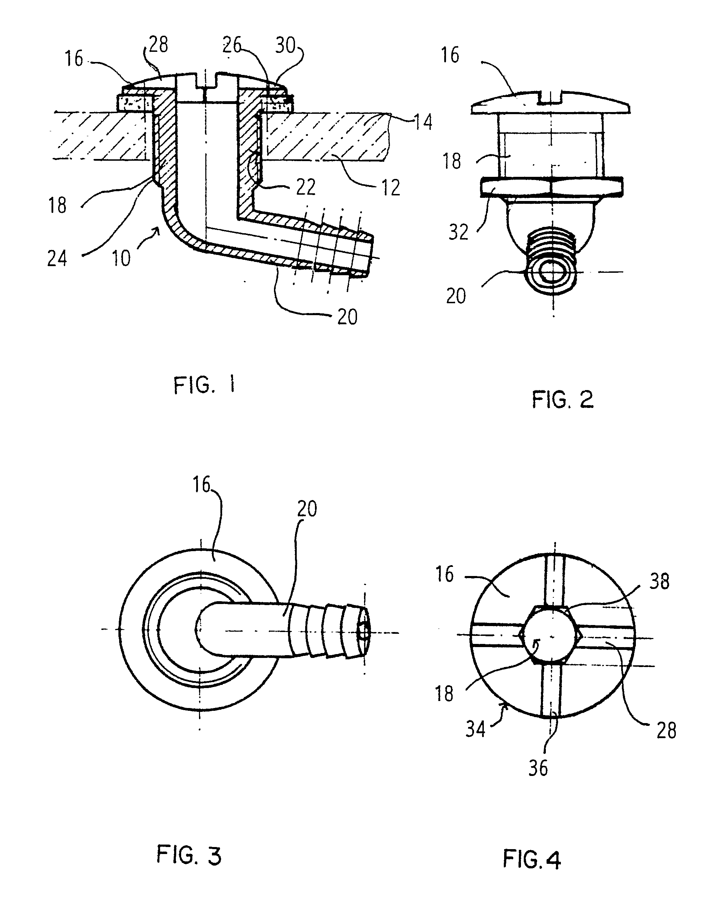

In dem Schnitt gemäß Fig. 1 ist ein Ablaufstutzen 10 dargestellt, der sich durch den Boden 12 einer Kondensatwasserwanne 14 erstreckt und aus einem Flansch 16, einem Einlaß 18 und einem Auslaßrohr 20 besteht.

Der Einlaß 18 durchtritt eine Bohrung 22, die in dem Boden 12 vorgesehen ist. Der Einlaß 18 weist ferner ein Außengewinde 24 auf, wobei der Außendurchmesser des Außengewindes 24 etwas geringer als der Innendurchmesser der Bohrung 22 ist.

In dem dargestellten Ausführungsbeispiel ist der Flansch 16 als umlaufender Rand oder Kragen ausgebildet und schließt den Einlaß 18 oben ab. Zwischen dem Flansch 16 und dem Boden 12 erstreckt sich hier eine Dichtung 26, die als geschlossenporige Zellendichtung ausgebildet ist, wobei in der Darstellung gemäß Fig. 1 die Stärke der Dichtung überhöht dargestellt ist.

Der Flansch 16 weist zum Boden 12 eine im wesentlichen flache Unterseite auf, die gemäß einer weiteren Ausgestaltung nach außen abfällt. Die obere Abschlußfläche des Flansches 16 ist, jedenfalls im wesentlichen, konvex gewölbt, so daß der Flansch 16 insgesamt ein leicht balliges Aussehen erhält.

Um den Umfang des Flansches verteilt sind Einströmausnehmungen 28 vorgesehen, die in diesem Ausführungsbeispiel als Nuten 30 mit konstanter Breite und - aufgrund der balligen Ausführung des Flansches 16 - nach innen zunehmender Tiefe ausgeformt sind.

In diesem Ausführungsbeispiel erstreckt sich der Boden der Nuten 30 je im wesentlichen parallel zum Boden 12 der Kondensatwasserwanne 14. In einem anderen Ausführungsbeispiel ist es jedoch vorgesehen, diesen zum Einlaß 18 leicht abfallen zu lassen, damit das eingeschwappte Restkondenswasser auch nicht in den Nuten 30 stehenbleiben kann, sondern abgeleitet wird.

Die Materialstärke zwischen dem Boden der Nuten 30 und der unteren Seite des Flansches 16 ist je ziemlich gering gewählt und liegt erheblich unter der mittleren Materialstärke des Flansches 16.

In dem dargestellten Ausführungsbeispiel ist das Auslaßrohr 20 nicht horizontal, sondern fällt etwas ab, beispielsweise in einem Winkel von etwa 10°. Diese Maßnahme dient dazu, zu verhindern, daß das in den Einlaß 18 eingeflossene Kondensatwasser in dem Auslaßrohr 20 stehenbleibt.

Das Auslaßrohr 20 ist ferner endseitig mit einem an sich bekannten Steckanschluß für einen Schlauch versehen, mit welchem ein Abrutschen des Schlauches sicher verhindert werden kann.

Aus Fig. 2, die eine Ansicht des in Fig. 1 dargestellten Ablaufstutzens von vorne zeigt, ist ersichtlich, daß der Ablaufstutzen zur Befestigung in dem Boden 12 der Kondensatwasserwanne 14 mit einer Mutter 32, die auf dem Außengewinde 24 geführt ist, befestigt werden kann. Mit der Mutter 32 wird zugleich die Dichtung 26 zusammengepreßt und eine verdrehsichere und stabile Lagerung des Ablaufstutzens 10 in der Kondensatwasserwanne 14 bewirkt, wobei der Ablaufstutzen 10 zugleich als Stützpunkt für einen nicht dargestellten Schlauch dient, über welchen das Kondensatwasser abgeleitet wird.

Die Darstellung gemäß Fig. 3 zeigt einen Ansicht des erfindungsgemäßen Ablaufstutzens von unten. Hier wie auch in den weiteren Figuren bezeichnen gleiche Bezugszeichen gleiche Teile, so daß eine weitere Erläuterung entbehrlich ist.

Aus Fig. 4 ist ersichtlich, daß der Ablaufstutzen 10 in dem dargestellten Ausführungsbeispiel 4 um den Umfang verteilte Einströmausnehmungen 28 aufweist, die sich je sternförmig von einem Außenumfang 34 des Flansches 16 zu dem Einlaß 18 hin erstrecken.

Gemäß einer weiteren, besonders vorteilhaften Ausgestaltung ist es vorgesehen, die Einströmausnehmungen 28 an ihrem dem Außenumfang 34 zugewandten Ende 36 je zu erweitern, damit ein vergrößerter Strömungsbereich für das Einströmen des Schwellwassers bereite stellt werden kann.

Ferner ist aus Fig. 4 die Ausbildung des Innenumfangs des Einlasses 18 mindestens in dessen oberem Teil ersichtlich. Der Innenumfang des Einlasses 18 weist einen Innensechskant 38 auf, der für den Eingriff eines handelsüblichen Imbusschlüssels geeignet ist.

Mit dieser Maßnahme läßt sich eine besonders einfache Montage des erfindungsgemäßen Ablaufstutzens mit der Schraubbefestigung über die in Fig. 3 dargestellte Mutter 32 lagegesichert bereitstellen, ohne daß die Abführung des Kondensatwassers beeinträchtigt wäre.

Besonders günstig sind ferner die geringen Herstellungskosten des erfindungsgemäßen Ablaufstutzens, der beispielsweise als Spritzteil aus glasfaserverstärktem Kunststoff hergestellt werden kann.

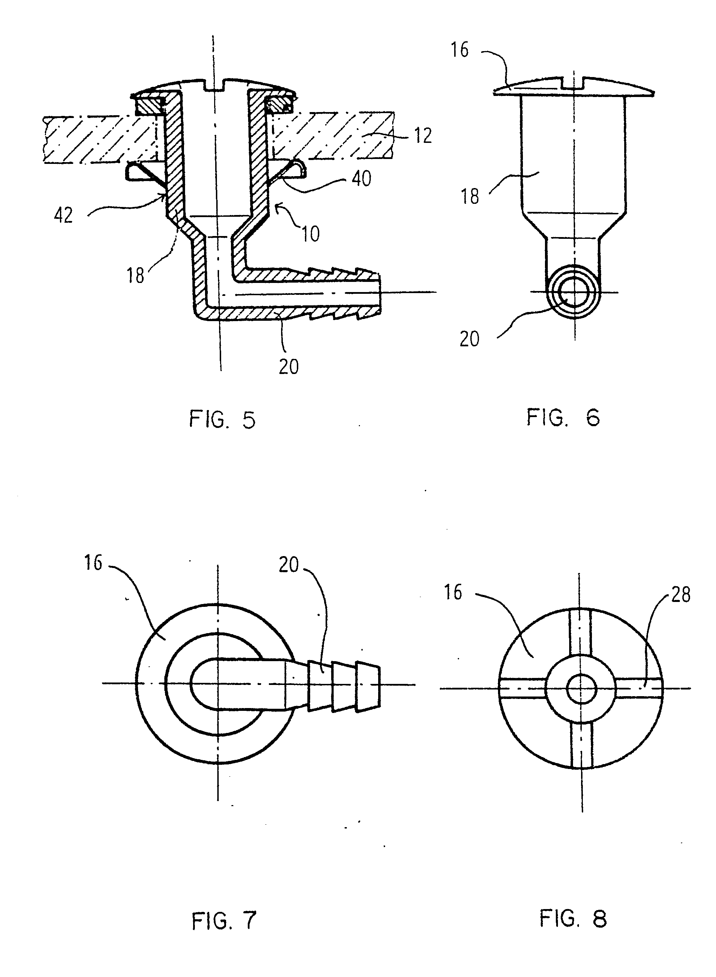

Die Ausführung gemäß Fig. 5 zeigt eine Befestigung des erfindungsgemäßen Ablaufstutzens 10 mit einer Federscheibe 40, die mit ihrer Oberseite an dem Boden 12 der Kondensatwasserwanne 14 anliegt und hierdurch den erfindungsgemäßen Ablaufstutzen 10 an dieser festhält.

In dem in den Figuren 5 bis 8 dargestellten Ausführungsbeispiel ist das Auslaßrohr 20 in einem Winkel von 90° gegenüber dem Einlaß 18 abgewinkelt vorgesehen, so daß das dort verbleibende Kondensatwasser durch die Bewegung des Fahrzeugs, sowie auch durch das nachströmende Kondensatwasser abgeführt wird.

Den dargestellten Ausführungsbeispielen ist gemeinsam, daß die Ablaufstutzen 10 je in Verbindung mit unterschiedlich starken Böden verwendet werden können. Hierzu ist das Außengewinde 24 bzw. eine entsprechende Eingriffsfläche 42 für die Federscheibe 40 entsprechend lang bemessen, so daß der erfindungsgemäße Ablaufstutzen 10 sowohl für aus Kunststoff als auch für aus Aluminium bestehende Kondensatwasserwannen eingesetzt werden kann.

## Ansprüche

1. Ablaufstutzen, insbesondere für die Entwässerung von Kondensatwasserwannen einer Fahrzeug-Klimaanlage, mit einem von einem Flansch umgebenen Einlaß- und einem sich an den Einlaß anschließenden Auslaßrohr, dadurch gekennzeichnet, daß der Flansch (16) sich im wesentlichen radial von seinem Außenrand (34) zum Einlaß (18) erstreckende Einströmausnehmungen (28) aufweist.

2. Ablaufstutzen nach Anspruch 1, dadurch gekennzeichnet, daß die Einströmausnehmungen (28) als gleichförmig um den Flansch (16) verteilte Nuten (30) ausgebildet sind.

3. Ablaufstutzen nach einem der vorhergehenden Ansprüche, dadurch gekennzeichnet, daß der Flansch (16) oben im wesentlichen konvex profiliert ist.

4. Ablaufstutzen nach einem der vorhergehenden Ansprüche, dadurch gekennzeichnet, daß der Flansch (16) eine ebene Unterseite aufweist.

5. Ablaufstutzen nach einem der vorhergehenden Ansprüche, dadurch gekennzeichnet, daß der Flansch (16) zur Bildung einer Liniendichtung an seiner Unterseite am Außenrand (34) nach unten vorspringt.

6. Ablaufstutzen nach einem der vorhergehenden Ansprüche, dadurch gekennzeichnet, daß die Einströmausnehmungen (28) im wesentlichen eben verlaufen.

7. Ablaufstutzen nach einem der vorhergehenden Ansprüche, dadurch gekennzeichnet, daß der Einlaß (18) innen für einen formschlüssigen Eingriff eines Befestigungswerkzeugs, insbesondere als Innensechskant (38), profiliert ist.

8. Ablaufstutzen nach einem der vorhergehenden Ansprüche, dadurch gekennzeichnet, daß am sich an den Flansch (16) anschließenden Abschnitt des Ablaufstutzens (10) eine Befestigungsvorrichtung (24, 32) angeordnet ist.

9. Ablaufstutzen nach Anspruch 8, dadurch gekennzeichnet, daß die Befestigungsvorrichtung eine Befestigungsmutter (32) aufweist, die mit einem Außengewinde (24) an dem Ablaufstutzen (10) in Eingriff steht, oder als Federscheibe (40) ausgebildet ist, die rast- oder klemmbar an einer Eingriffsfläche (42) des Ablaufstutzens (10) befestigbar ist.

10. Ablaufstutzen nach einem der vorhergehenden Ansprüche, dadurch gekennzeichnet, daß das Auslaßrohr (20) mit einem Winkel von etwas mehr als 90°, insbesondere etwa 100°, abgewinkelt ist.

11. Kondensatwasserwanne mit einem Boden (12)und einem Ablaufstutzen (10) für die Ableitung von Kondensatwasser, gekennzeichnet durch die Merkmale eines der vorhergehenden Ansprüche.

12. Kondensatwasserwanne nach Anspruch 11, dadurch gekennzeichnet, daß ein Boden (12) eine insbesondere durch Drücken herstellbare Mulde für die Aufnahme des Ablaufstutzens aufweist.

FIG. 1

FIG. 2

FIG. 3

FIG.4

FIG. 5

FIG. 6

FIG. 7

FIG. 8